# EUROPEAN PATENT APPLICATION

(11) **EP 2 009 870 A1**
(43) Date of publication of application: **31.12.2008**
(21) Application number: 08011726.0
(22) Date of filing: 27.06.2008
(51) Int. Cl.: H04L 29/06

(54) **Message forwarding method and network device**

(30) Priority: 28.06.2007 CN 200710127523; 05.03.2008 WO PCT/CN2008/070416
(71) Applicant: Huawei Technologies Co., Ltd., Longgang District, Shenzhen Guangdong 518129 (CN); Beijing University of Posts and Telecommunications, Beijing 100876 (CN)
(72) Inventor: Xin, Yang, Haidian District Beijing 100876 (CN); Liu, Lifeng, Longgang District Shenzhen Guangdong Provice 518129 (CN); Zheng, Zhibin, Longgang District Shenzhen Guangdong Provice 518129 (CN); Zhu, Hongliang, Haidian District Beijing 100876 (CN); Zhao, Kai, Haidian District Beijing 100876 (CN); Yang, Yixian, Haidian District Beijing 100876 (CN)
(74) Representative: Pfenning, Meinig & Partner GbR

(57) **Abstract**

A message forwarding method includes: receiving a SIP registration request message carrying a contact address; obtaining the contact address carried in the SIP registration request message; and determining that the contact address is one of SIP proxy server addresses in a network stored in advance and executing an abnormal process on the SIP registration request message. The present invention also discloses a network device. The message forwarding method and network device in the present invention can prevent a SIP loop attack.

## Description

### Cross-Reference to Related Applications

This application claims priority to Chinese Patent Application no. 200710127523.2, entitled "Message forwarding method and network device" and filed with the Chinese Patent Office on June 28, 2007, and priority to PCT Application no. PCT/CN2008/070416, filed on March 5, 2008, which are hereby incorporated by reference in their entireties.

### Field of the Invention

The present embodiments relate to a message forwarding method and a network device.

### Background of the Invention

Next Generation Network (NGN) has experienced rapid development throughout the world and Session Initiation Protocol (SIP) has been widely used in the NGN network. An attack of Denial of Service (DoS) is a common network attack embodied by the SIP loop attack that refers to that a SIP registration request message (Register) is routed to a SIP proxy server which processes and forwards the SIP registration request message, and thereafter the message arrives again at the SIP proxy server which processes the SIP registration request message totally the same as previous processing. For example, a user of user1@domain1.com registers user2@domain2.com as his contact domain (Contact) address and a user of user2@domain2.com registers user1@domain1.com as his Contact address; and when a registration request message intended for domain2.com arrives at a SIP proxy server 2, the SIP proxy server 2 queries a database and discovers that the Contact address of user2@domain2.com is user1@domain1.com, replaces user2@domain2.com in the Request-URI (Uniform Resource Identifier) with user1@domain1.com, and then sends the message to a SIP proxy server 1 of domain1.com. Upon receiving the message, the SIP proxy server 1 replaces user1@domain1.com in the Request-URI with user2@domain2.com and sends the message to the proxy server 2 of domain2.com. The SIP registration request message is looped constantly between the two SIP proxy servers. If SIP proxy servers adopt a forking mechanism, then the scope of the loop attack may be extended further. The forking mechanism refers to that the SIP server may send the corresponding SIP message to each of a plurality of Contact addresses corresponding to the Request-URI if it finds the Contact addresses by searching in the database.

In order to solve the problem of the SIP loop attack, a field of Max-Forwards has been defined in a SIP registration request message in the prior art, and the value of the filed specifies the maximum number of hops of the SIP registration request message over a network. Upon receiving the SIP registration request message, a SIP proxy server obtains the value of Max-Forwards, determines whether the value of Max-Forwards is zero, and if so, it discards the message; otherwise, it forwards the message while decrementing Max-Forwards by one. At the presence of a SIP loop attack, the SIP proxy server may discard a SIP message after the message is looped for a number of times equal to Max-Forwards.

The inventors have identified during making the invention at least the following drawback in the prior art: the value of Max-Forwards may not be too small in order to prevent a normal message from being discarded prior to arrival at a destination address, and at the presence of a SIP loop attack, the loop attack will not be stopped until the value of Max-Forwards is decremented to zero due to the maximum number of loops, which may waste a resource of the SIP proxy server.

### Summary of the Invention

The present embodiments may obviate one or more drawbacks or limitations inherent in the related art..

In one embodiment, a message forwarding method includes: receiving a SIP registration request message carrying a contact address; obtaining the contact address carried in the SIP registration request message; and determining that the contact address is one of SIP proxy server addresses in a network stored in advance and executing an abnormal process on the SIP registration request message.

In one embodiment, a network device includes: a proxy server address storage unit adapted to store SIP proxy server addresses in a network; a registration request message receiving unit adapted to receive a SIP registration request message carrying a contact address; a contact address obtaining unit adapted to obtain the contact address carried in the SIP registration request message received by the registration request message receiving unit; and a registration request message processing unit adapted to determine that the contact address obtained by the contact address obtaining unit is one of the SIP proxy server addresses stored in the proxy server address storage unit and to execute an abnormal process on the SIP registration request message.

The technical solutions provided in the embodiments of the invention detects a loop attack behavior by detecting whether the contact address in the SIP registration request message from a user is one of the SIP proxy server addresses, that is, in a preparation phrase before an attacker initiates an attack. If the contact address is determined to be one of the SIP proxy server addresses stored in the network in advance, then a loop attack behavior is discovered. An abnormal process on the SIP registration request message from a user is executed, thereby eliminating the loop attack behavior early in the preparation phrase and preventing SIP loop attack.

### Brief Description of the Drawings

Fig.1 is a flow chart of a message forwarding method according to a first embodiment of the invention;

Fig.2 is a flow chart of a message forwarding method according to a second embodiment of the invention;

Fig.3 is a schematic diagram of a network device according to a third embodiment of the invention; and

Fig.4 is a schematic diagram of a network device according to a fourth embodiment of the invention.

### Detailed Description of the Invention

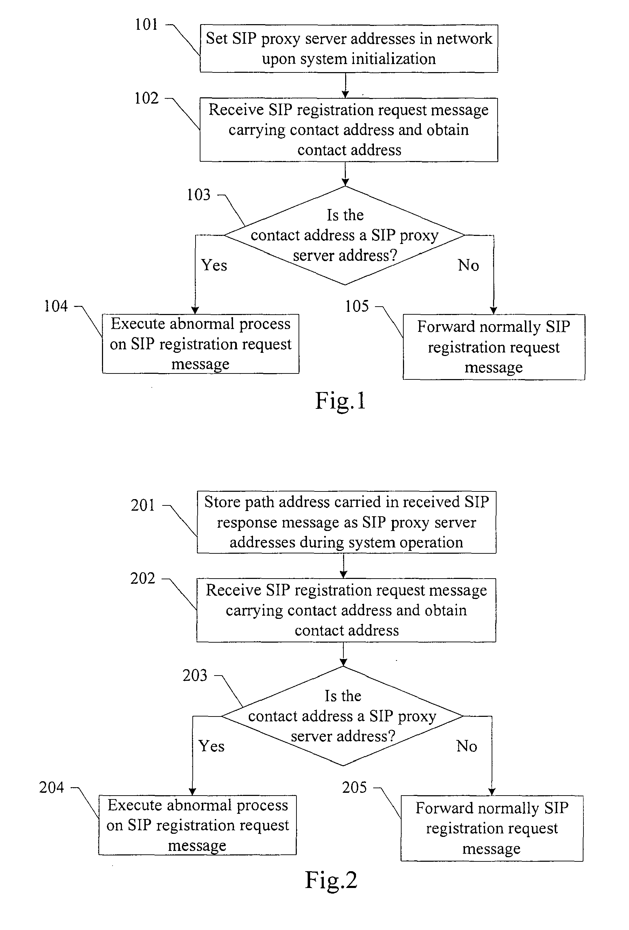

Referring to Fig.1, it is a flow chart of a message forwarding method according to the first embodiment of the invention.

At block 101, a SIP proxy server sets SIP proxy server addresses in the network upon system initialization, where the SIP proxy server addresses can be domain name addresses or Internet Protocol (IP) addresses.

The SIP proxy server can obtain the SIP proxy server addresses in the network through sending a broadcast message to other SIP proxy servers or sending a request message directly to a core control device and stores the obtained SIP proxy server addresses into a legal proxy server database.

A SIP proxy server A can send status information or error information to other SIP proxy servers upon a failure or exiting, and the other SIP proxy servers delete address information of the SIP proxy server A from the legal proxy server database upon receiving the status information or error information. Each SIP proxy server can share its legal proxy server database with other SIP proxy servers in the network, and the SIP proxy server upon initialization sends a message requesting for address information of proxy servers (i.e. the broadcast message mentioned above) only to those SIP proxy servers in direct communication therewith instead of all SIP proxy servers, thereby enabling compatibility with a network in no support of broadcast. The SIP proxy servers can exchange information with each other in an existing communication protocol or a self-defined protocol.

It can be appreciated that the SIP proxy server addresses in the network can be set manually upon system initialization without turning to the other devices.

The legal proxy server database can store the SIP proxy server addresses in a form of table with the format shown in Table 1.

| Serial number | Proxy server name | IP address | Domain name | Modification date |
|---|---|---|---|---|
| 1 | Proxy1 | 192.168.1.10 | domain1.com | 2006.10.10 |
| ... | ... | ... | ... | ... |

At block 102, the SIP registration request message carrying the contact address is received and the contact address carried in the SIP registration request message is obtained. The contact address refers to a Uniform Resource Identifier (URI) address of the Contact field in the SIP registration request message. The contact address may be a domain name address and/or an Internet Protocol (IP) address.

The URI address of the Contact field in the SIP registration request message includes a domain name address, for example, in a format of alice@client.example.com, an IP address, for example, in a format of alice@10.110.225.23. The IP address may include an Internet Protocol Version 4 (IPv4) or Version 6 (IPv6) address. The embodiment can support both IPv4 and IPv6. Upon receiving the SIP registration request message, the value of the Contact field in the SIP registration request message is extracted to obtain the address information behind the character @ of the domain value.

At block 103, the legal proxy server database is queried, the obtained contact address is matched against the SIP proxy server addresses stored in the legal proxy server database to determine whether the contact address is one of the SIP proxy server addresses stored in advance, and if so, the flow proceeds with the step 104; otherwise, the flow proceeds with the step 105.

For matching, if a match string is an IP address, then the IP address column in the database is searched for the match string in a character match principle, and then a match result is processed correspondingly. If the match string is a domain name address which is not stored and only IP addresses are stored in the database, then a domain name query request can be made to a domain name server for obtaining an IP address corresponding to the domain name address, and then the IP address column in the database is searched for the match string in a character match principle; and if a match IP address is found, then the domain name address is stored in the domain name address column corresponding to the IP address, so that it is not necessary to search the domain name server again the next time the match string is the same domain name address.

At block 104, an abnormal process is executed on the SIP registration request message, for example, by discarding the SIP registration request message or storing alarm information generated from the abnormal process.

At block 105, the SIP registration request message is forwarded normally.

Referring to Fig.2, it is a flow chart of a message forwarding method according to the second embodiment of the invention.

At block 201, a SIP proxy server receives a SIP response message carrying a path address, obtains the path address carried in the SIP response message, determines whether the path address as a SIP proxy server address in the network has already been stored in a legal proxy server database, and if so, it is not necessary to store the SIP proxy server address into the legal proxy server database; otherwise, the SIP proxy server address is stored in the legal proxy server database. The path address refers to a linkage address of a route field (Via) in the SIP response message.

In order to ensure legality of the SIP response message, the SIP response message can be prevented from being falsified by an attacker in cooperation with a session transaction detection mechanism which can detect whether the SIP response message complies with a normal session flow. If the attack sends the response message for a nonexistent registration request message, then the response message does not comply with the normal session flow and will be filtered out. An intrusion Detection System (IDS) can implement the session transaction detection mechanism. It can be appreciated that legality of the SIP response message can be detected with the session transaction detection mechanism before obtaining the path address carried in the SIP response message to ensure legality of the path address.

At block 202, a SIP registration request message carrying a contact address is received and the contact address carried in the SIP registration request message is obtained.

At block 203, the legal proxy server database is queried, the obtained contact address is matched against SIP proxy server addresses stored in the legal proxy server database to determine whether the contact address is one of the SIP proxy server addresses stored in advance, and if so, the flow proceeds with the step 204; otherwise, the flow proceeds with the step 205.

At block 204, an abnormal process is executed on the SIP registration request message.

At block 205, the SIP registration request message is forwarded normally.

In the above first embodiment, it can be considered that the information of the legal proxy server is configured statically upon system initialization; and in the above second embodiment, it can be considered that the information of the legal proxy server is configured dynamically by being updated constantly with the obtained path address during system operation. It shall be noted that the static and dynamic modes can be combined in a specific implementation in a way that the information of the legal proxy server is configured upon system initialization and is updated constantly during system operation. Thus, the SIP proxy server addresses throughout the network can be stored prior to operation and the stored SIP proxy server addresses also can vary as the network changes during operation.

It is apparent from the above first and second embodiments, the embodiments of the invention receive a SIP registration request message carrying a contact address obtain the contact address carried in the SIP registration request message, determine that the contact address is one of the SIP proxy server addresses in the network stored in advance and executes an abnormal process on the SIP registration request message, thereby preventing a SIP loop attack and improving processing performance of the SIP proxy server. The technical solutions detects a loop attack behavior by detecting whether the contact address in the SIP registration request message from a user is one of the SIP proxy server addresses, that is, in a preparation phrase before an attacker initiates an attack (for example, by registering the proxy server address as the contact address), and executes an abnormal process on the SIP registration request message from a user upon discovering any loop attack behavior, thereby eliminating the loop attack behavior early in the preparation phrase and nipping a hidden danger in the bud.

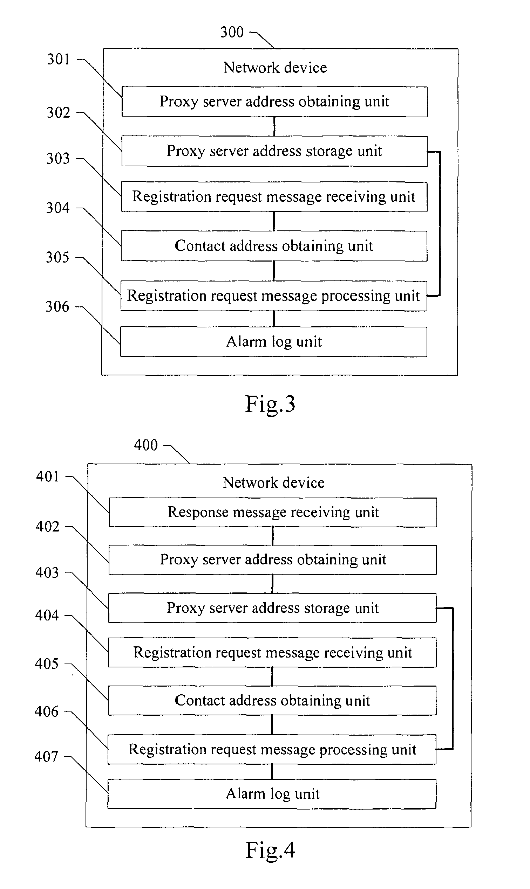

Referring to Fig.3, it is a schematic diagram of a network device according to the third embodiment of the invention.

The network device 300 includes a proxy server address storage unit 302, a registration request message receiving unit 303, a contact address obtaining unit 304 and a registration request message processing unit 305 and also optionally a proxy server address obtaining unit 301 and an alarm log unit 306. In which:

The proxy server address obtaining unit 301 is adapted to obtain SIP proxy server addresses in the network from other network devices and to send the SIP proxy server addresses to the proxy server address storage unit 302; the proxy server address storage unit 302 is adapted to store the SIP proxy server addresses in the network; the registration request message receiving unit 303 is adapted to receive a SIP registration request message carrying a contact address; the contact address obtaining unit 304 is adapted to obtain the contact address carried in the SIP registration request message of the registration request message receiving unit 303; the registration request message processing unit 305 is adapted to determine that the contact address obtained by the contact address obtaining unit 304 is one of the SIP proxy server addresses stored in the proxy server address storage unit 302 and to execute an abnormal process on the SIP registration request message; and the alarm log unit 306 is adapted to store information of the abnormal process when the registration request message processing unit 305 executes the abnormal process on the SIP registration request message.

Where the above contact address can be a domain name address and/or an IP address, the above SIP proxy server addresses can be domain name addresses and/or IP addresses, and the above network device 300 can be a SIP proxy server or an intrusion detection system.

The proxy server address obtaining unit 301 obtains the SIP proxy server addresses in the network from the other network devices in a way that, for example, the SIP proxy server sends a broadcast message to the other SIP proxy servers or sends a request message directly to a core control device, obtains the SIP proxy server addresses in the network and sends the obtained SIP proxy server addresses to the proxy server address storage unit 302. The proxy server address storage unit 302 stores the SIP proxy server addresses in the network. The registration request message receiving unit 303 receives the SIP registration request message carrying the contact address. The contact address obtaining unit 304 obtains the contact address carried in the SIP registration request message of the registration request message receiving unit 303. The registration request message processing unit 305 determines that the contact address obtained by the contact address obtaining unit 304 is one of the SIP proxy server addresses stored in the proxy server address storage unit 302 and executes the abnormal process on the SIP registration request message. The alarm log unit 306 stores the information of the abnormal process when the registration request message processing unit 305 executes the abnormal process on the SIP registration request message.

It is apparent from the above third embodiment that in the network device according to the embodiment of the invention, the proxy server address obtaining unit 301 obtains the SIP proxy server addresses in the network from the other network devices, the proxy server address storage unit 302 stores the SIP proxy server addresses in the network, the registration request message receiving unit 303 receives the SIP registration request message carrying the contact address, the contact address obtaining unit 304 obtains the contact address carried in the SIP registration request message, and the registration request message processing unit 305 determines that the obtained contact address is one of the stored SIP proxy server addresses and executes the abnormal process on the SIP registration request message, thereby preventing a SIP loop attack and improving processing performance of the SIP proxy server.

Referring to Fig.4, it is a schematic diagram of a network device according to the fourth embodiment of the invention.

The network device 400 includes a proxy server address storage unit 403, a registration request message receiving unit 404, a contact address obtaining unit 405 and a registration request message processing unit 406 and also optionally a response message receiving unit 401, a proxy server address obtaining unit 402 and an alarm log unit 407. In which:

The response message receiving unit 401 is adapted to receive a SIP response message carrying a path address; the proxy server address obtaining unit 402 is adapted to obtain the path address carried in the SIP response message received by the response message receiving unit 401 and to send the path address as a SIP proxy server address in the network to the proxy server address storage unit; the proxy server address storage unit 403 is adapted to store the SIP proxy server address in the network; the registration request message receiving unit 404 is adapted to receive a SIP registration request message carrying a contact address; the contact address obtaining unit 405 is adapted to obtain the contact address carried in the SIP registration request message of the registration request message receiving unit 404; the registration request message processing unit 406 is adapted to determine that the contact address obtained by the contact address obtaining unit 405 is one of SIP proxy server addresses stored in the proxy server address storage unit 403 and to execute an abnormal process on the SIP registration request message; and the alarm log unit 407 is adapted to store information of the abnormal process when the registration request message processing unit 406 executes the abnormal process on the SIP registration request message.

Where the above contact address can be a domain name address and/or an IP address, the above SIP proxy server address can be a domain name address and/or an IP address, and the above network device 400 can be a SIP proxy server or an intrusion detection system

In the network device according to the embodiment, the response message receiving unit 401 receives the SIP response message carrying the path address. The proxy server address obtaining unit 402 obtains the path address carried in the SIP response message received by the response message receiving unit 401 and sends the path address as the SIP proxy server address in the network to the proxy server address storage unit 403. The proxy server address storage unit 403 stores the SIP proxy server address in the network. The registration request message receiving unit 404 receives the SIP registration request message carrying the contact address. The contact address obtaining unit 405 obtains the contact address carried in the SIP registration request message of the registration request message receiving unit 404. The registration request message processing unit 406 determines that the contact address obtained by the contact address obtaining unit 405 is one of the SIP proxy server addresses stored in the proxy server address storage unit 403 and executes the abnormal process on the SIP registration request message. The alarm log unit 407 stores the information of the abnormal process when the registration request message processing unit 406 executes the abnormal process on the SIP registration request message.

It is apparent from the above fourth embodiment that in the network device according to the embodiment of the invention, the response message receiving unit 401 1 receives the SIP response message carrying the path address, the proxy server address obtaining unit 402 obtains the path address carried in the SIP response message and takes the path address as the SIP proxy server address in the network, the proxy server address storage unit 403 stores the SIP proxy server address in the network, the registration request message receiving unit 404 receives the SIP registration request message carrying the contact address, the contact address obtaining unit 405 obtains the contact address carried in the SIP registration request message, the registration request message processing unit 406 determines that the contact address is one of the SIP proxy server addresses and executes the abnormal process on the SIP registration request message, thereby preventing a SIP loop attack and improving processing performance of the SIP proxy server.

In another embodiment as a result of a combination of the third and fourth embodiments, a network device according to the embodiment includes a proxy server address obtaining unit, a proxy server address storage unit, a response message receiving unit, a registration request message receiving unit, a contact address obtaining unit, a registration request message processing unit and an alarm log unit. The network device operates in a process that the proxy server address obtaining unit obtains SIP proxy server addresses in the network from other network devices and sends the obtained SIP proxy server addresses to the proxy server address storage unit. The proxy server address storage unit stores the SIP proxy server addresses in the network. The response message receiving unit receives a SIP response message carrying a path address. The proxy server address obtaining unit obtains the path address carried in the SIP response message received by the response message receiving unit and sends the path address as a SIP proxy server address in the network to the proxy server address storage unit. The proxy server address storage unit stores the SIP proxy server addresses in the network. The registration request message receiving unit receives a SIP registration request message carrying a contact address. The contact address obtaining unit obtains the contact address carried in the SIP registration request message received by the registration request message receiving unit. The registration request message processing unit determines that the contact address obtained by the contact address obtaining unit is one of the SIP proxy server addresses stored in the proxy server address storage unit and executes an abnormal process on the SIP registration request message. The alarm log unit stores information of the abnormal process when the registration request message processing unit executes the abnormal process on the SIP registration request message. The above network device can store the SIP proxy server addresses throughout the network prior to operation and enable the stored SIP proxy server addresses to vary as the network changes during operation.

It shall be noted that the embodiments of the invention can be applicable to the NGN network based upon the core of a soft switch and also to the NGN network based upon an IP Multimedia System (IMS).

The message forwarding method and the network device according to the embodiments of the invention have been described in details above, the principle and embodiments of the invention have been set forth in the context by way of specific examples, and the above descriptions of the embodiments are provided only to facilitate understanding of the method of the invention and the idea thereof, and those ordinarily skilled in the art can vary the embodiments and application scopes without departing from the idea of the invention. Accordingly, the disclosure of the invention in the context shall not be taken in any way of limiting the scope of the invention.

## Claims

1. A message forwarding method, comprising:
receiving a Session Initiation Protocol registration request message carrying a contact address;
obtaining the contact address carried in the Session Initiation Protocol registration request message; and
determining whether the contact address is one of Session Initiation Protocol proxy server addresses in a network stored in advance and executing an abnormal process on the Session Initiation Protocol registration request message if the contact address is determined as one of Session Initiation Protocol proxy server addresses in the network stored in advance .

2. The method according to claim 1, wherein before receiving the Session Initiation Protocol registration request message carrying the contact address, the method further comprises:
obtaining the Session Initiation Protocol proxy server addresses in the network from other network devices; and
storing the Session Initiation Protocol proxy server addresses in the network.

3. The method according to claim 2, comprising: obtaining the Session Initiation Protocol proxy server addresses in the network from the other network devices by sending a broadcast message or a request message.

4. The method according to claim 1, wherein before receiving the Session Initiation Protocol registration request message carrying the contact address, the method further comprises:
receiving a Session Initiation Protocol response message carrying a path address; and
storing the path address as a Session Initiation Protocol proxy server address in the network.

5. The method according to claim 4, wherein the path address is a linkage address of a route field in the Session Initiation Protocol response message.

6. The method according to any one of claims 1 to 5, wherein the contact address is a domain name address and/or an Internet Protocol address, and the Session Initiation Protocol proxy server addresses are domain name addresses and/or Internet Protocol addresses.

7. A network device, comprising:
a proxy server address storage unit adapted to store Session Initiation Protocol proxy server addresses in a network;
a registration request message receiving unit adapted to receive a Session Initiation Protocol registration request message carrying a contact address;
a contact address obtaining unit adapted to obtain the contact address carried in the Session Initiation Protocol registration request message received by the registration request message receiving unit; and
a registration request message processing unit adapted to determine whether the contact address obtained by the contact address obtaining unit is one of the Session Initiation Protocol proxy server addresses stored in the proxy server address storage unit and execute an abnormal process on the Session Initiation Protocol registration request message if the contact address is determined as one of Session Initiation Protocol proxy server addresses in the network stored in advance.

8. The network device according to claim 7, further comprising: a proxy server address obtaining unit adapted to obtain the Session Initiation Protocol proxy server addresses in the network from other network devices and to store the obtained Session Initiation Protocol proxy server addresses into the proxy server address storage unit.

9. The network device according to claim 7, further comprising:
a response message receiving unit adapted to receive a Session Initiation Protocol response message carrying a path address; and
a proxy server address obtaining unit adapted to obtain the path address carried in the Session Initiation Protocol response message received by the response message receiving unit and to store the path address as a Session Initiation Protocol proxy server address in the network into the proxy server address storage unit.

10. The network device according to claim 7, further comprising: an alarm log unit adapted to store information of the abnormal process when the registration request message processing unit processes the Session Initiation Protocol registration request message.

11. The network device according to claim 7, wherein the contact address is a domain name address and/or an Internet Protocol address, and the Session Initiation Protocol proxy server addresses are domain name addresses and/or Internet Protocol addresses.

12. The network device according to any one of claims 7 to 11, wherein the network device is a Session Initiation Protocol proxy server or an intrusion detection system.
